# EUROPEAN PATENT SPECIFICATION

(11) **EP 1 809 113 B1**
(45) Date of publication and mention of the grant of the patent: **03.12.2008**
(21) Application number: 05762281.3
(22) Date of filing: 30.06.2005
(51) Int. Cl.: A22C 13/00, C08J 7/04

(54) **SLIP RESISTANT TUBULAR FOOD CASING COMPRISING CELLULOSE OR FIBRE-REINFORCED CELLULOSE**
GLEITRESISTENTE SCHLAUCHFÖRMIGE NAHRUNGSMITTELHÜLLE, DIE CELLULOSE ODER FASERVERSTÄRKTE CELLULOSE ENTHÄLT
BOITE POUR ALIMENTS TUBULAIRE ET RESISTANT AU GLISSEMENT COMPRENANT DE LA CELLULOSE OU DE LA CELLULOSE RENFORCEE DE FIBRES

(30) Priority: 09.11.2004 FI 20041439
(43) Date of publication of application: 25.07.2007
(73) Proprietor: Eriksson Capital AB, 22101 Mariehamn (FI)
(72) Inventor: VUORELA, Ari, 10300 KARJAA (FI); MÖLKÄNEN, Keijo, 10900 HANKO (FI); RINTALA, Tero, 02320 ESPOO (FI); HIHNALA, Esa, 08150 LOHJA (FI)
(74) Representative: Hakkila, Maini Annika
(86) International application number: PCT/FI2005/050260
(87) International publication number: WO 2006/051158

(56) References cited:
- WO-A1-01/03508
- DE-A1- 3 811 440
- GB-A- 657 342
- US-A- 4 194 024
- US-A- 4 296 142
- US-A- 4 967 798

## Description

### Field of the invention

The invention relates to slip resistant seamless food casings and more particularly to slip resistant seamless tubular food casings comprising cellulose or cellulose hydrate and having the surface modified with particles or fibres of food compatible material. The invention also relates to a method for the manufacture of said slip resistant tubular food casing having the surface modified with particles or fibres of food compatible material, and to the use of the obtained slip resistant seamless tubular food casing.

### Background of the invention

Synthetic tubular food casings comprising cellulose or fibre-reinforced cellulose regenerated from a cellulose derivative, such as xanthate viscose or underivatized cellulose precipitated from cellulose solution are well known in the art. Typically foodstuffs, such as sausage emulsions, are filled into cellulose or fibre-reinforced cellulose casings when they are in the moistened state. Water acts as a moisturizer for the casing and gives the casing the necessary pliability and extensibility.

In high speed manufacture and particularly during manual operations there appear problems relating to gripping and retaining the casing, when the soft and flexible cellulose or fibre-reinforced cellulose casings, often in the form of tubular pieces clipped or tied of at one end, are pushed onto the stuffing horn of the filling machine. The lack of grip arises from several different reasons. The cellulose or fibre-reinforced cellulose casings themselves are made of a material that has a smooth surface. Additionally, the casings are often plasticized using mainly glycerine, which adds certain slipperiness to the casing surface. Typically there may also be other plastisizers and lubricants present, which add even further to the slipperiness of the casing surface.

A slip resistant food casing and a method for making the same are presented in WO 01/03508. A tubular food casing, particularly a cellulose casing, is provided having an exterior coating thereon where the coating includes a mixture of a food compatible resin and inorganic particles. Accordingly, the exterior of a tubular cellulose film is coated with an aqueous suspension containing 0.2 to about 10 wt% of water-insoluble inorganic particles, preferably silica and 0.2 to about 10 wt% of a food compatible resin which is preferably a cationic resin, such as a cross-linkable epichlorohydrin/polyamine-polyamide resin. The coating operation of the casing is carried out running the casing through a tank containing an aqueous suspension containing the resin and the particles, followed by drying the casing.

US 4,967,798 presents a solution to the slipperiness problem by coating the outside surface of the casing with a surface layer comprising a water-insoluble cationic resin containing particles or fibres of cellulose or a synthetic resin, particularly particles of a vinyl chloride homopolymer or copolymer, to provide a roughened outer surface. As WO 01/03508 describes, this method no doubt has some effect, however the surface still does not provide as much "grip" as desired to the outside surface of the casing. In addition, the grip may become worse after the casing is soaked in warm water. According to US 4,967,798, a combination of heat-cured resin with synthetic resin or cellulose particles form the two principal components of the invention. The particles or fibres are embedded in the resin layer. The process for the manufacture such casing consists essentially of the steps of coating the entire outside surface of a tube of fibre-reinforced cellulose with an aqueous dispersion of a still water-soluble cationic resin, drying said tube at an elevated temperature to crosslink the resin to water-insoluble form, wherein the aqueous dispersion contains 0.5-10 wt% of particles or fibres of cellulose or a synthetic resin.

US 4,296,142 discloses a method for coating a tubular food casing, which method includes subjecting an inflated section, which is preferably heated, of the food casing to a cloud of electrostatically charged dry particles of a resinous polymer using a spray gun, and then the coated food casing is sintered.

The methods according to prior art for improving the grip and slip resistance of a food casings involve the use of a resin or an adhesive, usually in combination with particles, to make the surface of the casing rougher.

Based on the above it can be seen that there exists a need for a food casing with improved grip and slip resistance properties and to a method for the manufacture of the same, without the need to use any adhesives or resins.

### Object of the invention

An object of the invention is to provide a food casing based on cellulose or fibre-reinforced cellulose, with improved slip resistance and grip properties and which casing can be easily pushed onto a stuffing horn in the wet stage.

It is also an object of the invention to provide a method for the manufacture of a food casing based on cellulose or fibre-reinforced cellulose with improved slip resistance and grip properties.

A further object of the invention is the use of the obtained food casing in the manufacture of food products, such as sausages.

Characteristic features of the food casing, of the method for the manufacture of said food casing and of the use of said food casing are provided in the claims.

### Summary of the invention

The invention relates to a tubular food casing comprising cellulose or fibre-reinforced cellulose casing having an external surface modified with particles and/or fibres of food compatible material without adhesives. The invention also relates to a method for the manufacture of a tubular food casing, comprising the steps wherein a tubular fibrous paper substrate is impregnated with viscose and then coated with food compatible material. Preferably the coating is carried out under the die before coagulation and regeneration baths. A slip resistant seamless tubular food casings comprising cellulose or cellulose hydrate and having the surface modified with particles or fibres of food compatible material is obtained.

### Brief description of the drawing

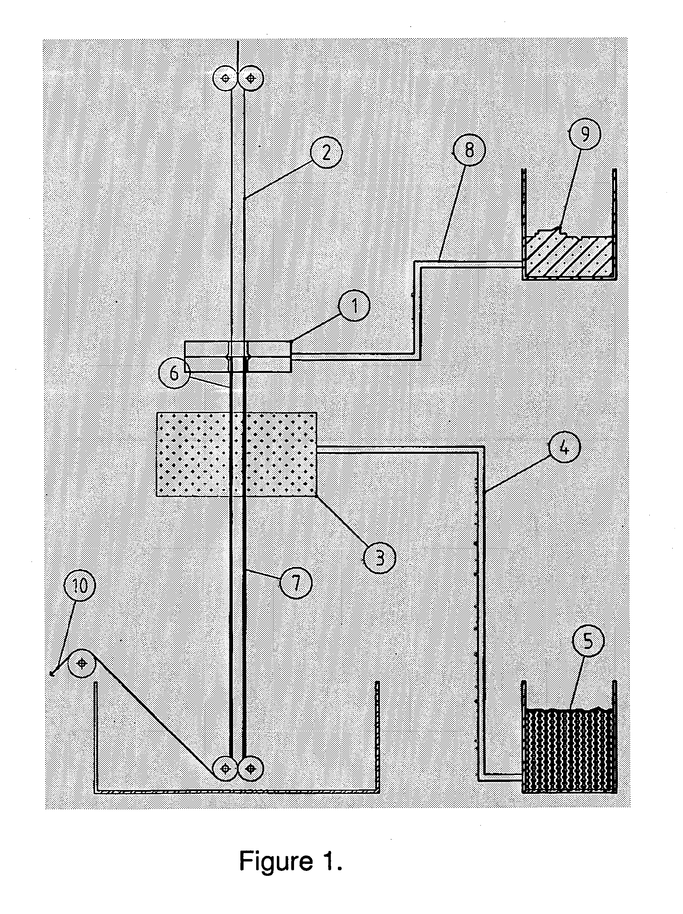

Figure 1 shows one preferable embodiment of the method according to the invention for the manufacture of a slip resistant seamless tubular food casing.

In figure 1 an example of the method according to the invention is shown schematically. Viscose (as an aqueous solution) is transferred as viscose stream 8 to die 1 from a viscose aging tank 9 and the viscose is impregnated in the die 1 onto a fibrous paper substrate 2, which is lead to the die 1 in tubular form. To the viscose stream 8 colour may be added (not shown in the figure). After the die 1, in this figure under the die 1, the impregnated paper tubing 6 is passed to a coating chamber 3. Stream 4 containing gas and fibres and/or particles of coating material, here cellulose, from container 5, is passed by one or several spray guns, air wipe or air knife on the surface of the viscose impregnated tubing 6 in the coating chamber 3, which comprises said one or several spray guns, air wipe or air knife. From the coating chamber 3 the coated tubing 7, which is coated with the fibres and/or particles, is then passed to coagulating and regeneration baths (not shown in the figure). After the coating the process is continued like a conventional viscose process including washing, plastisizing and drying stages 10. A tubular food casing, having an outer surface comprising fibres and/or particles of cellulose, is obtained.

### Detailed description of the invention

The invention is directed to a slip resistant seamless tubular food casing comprising cellulose or fibre-reinforced cellulose casing having an external surface modified with particles and/or fibres of food compatible material or food compatible materials without any adhesives or resins. The invention is also directed to a method for the manufacture of said slip resistant seamless tubular food casing, comprising the steps wherein a tubular fibrous paper substrate is impregnated with viscose, which is optionally coloured, and then coated with food compatible material.

Preferably the coating is carried out under the die where viscose is impregnated onto or into the paper substrate the before coagulation and regeneration baths. The coated, viscose impregnated fibrous paper tubing is then passed to conventional coagulating and regeneration baths and the process is continued as a conventional viscose process including washing, plastisizing, optional adhesive and/or peeling aid treatment and drying stages. Such conventional process steps including coagulation and regeneration baths are all well known to a man skilled in the art.

Alternatively the coating may also be carried out after the coagulation or regeneration baths.

According to the invention particles and/or fibres of food compatible material or food compatible materials are transferred to the surface of a tubular food casing and a tubular food casing with a surface layer modified with fibres and/or particles of a food compatible material or materials and with a matt surface is obtained.

A food casing having an external surface modified with particles and/or fibres of food compatible material or food compatible materials either means that the external surface of the food casing contains particles and/or fibres of food compatible material. In this case substantially water or acid insoluble material is used as the coating material, such as cellulose or plant fibres etc. and the fibres and/or particles of the food compatible material are attached to the surface of the casing (the final product).

Alternatively the food casing having an external surface modified with particles and/or fibres of food compatible material or food compatible materials means here that the external surface comprises craters and/or cavities, which make the surface rough and improves the gripping properties. In this case the particles and/or fibres of food compatible material are of substantially water or acid soluble material, such as an inorganic salt etc. During the coagulation, regeneration and washing steps after the coating operation, the coating material is dissolved from the surface of the casing leaving small craters and/or cavities on the surface.

The surface of the tubular food casing is uniform if the particles and/or fibres of the food compatible material are evenly applied on the surface. Alternatively the food compatible material may be applied on the surface of the food casing as stripes, dots or freely selected figures in any direction to gain the desired effect and look. Thus the food compatible material forms an even surface or stripes, dots or figures. The food casing is cellulose based or fibre-reinforced cellulose based casing.

The food compatible material is selected from particles and/or fibres of food compatible inorganic salts, salts of organic acids, saccharides, plants, glass, colour pigments, silica, alumina, titania and combinations of said materials. Preferably the food compatible material is an inorganic salt.

The saccharides are selected from monosaccharides, oligosaccharides, polysaccharides and their derivatives. Preferably the monosaccharide is glucose or fructose, the oligosaccharide is preferably saccharose, maltose or lactose and the polysaccharide is preferably cellulose, cellulose derivative, starch or starch derivative.

The plant is vegetable, fruit, cereal and preferably wheat, oat, apple, tomato, pea or orange.

The inorganic salt contains preferably a cation selected from sodium, potassium, magnesium, ammonium, calcium, iron, manganese, barium, titanium, silicon, silver, copper, chromium and aluminium and an anion selected from sulphate, carbonate, chloride, fluoride, iodide, nitrate, nitrite, bicarbonate, phosphate, hydroxide, oxide and silicate, particularly preferably the inorganic salt is sodium sulphate.

The salt of an organic acid is a sodium, potassium, magnesium, ammonium, calcium, iron, manganese, barium, titanium, silicon, silver, copper, chromium or aluminium salt of an organic acid with an alkyl chain having a chain length of C₁-C₂₀.

Preferably natural cellulose fibres or microcrystalline cellulose is used.

The average particle size of the particles of the food compatible material ranges between 0.1 µm and 2 mm, preferably between 0.1 and 400 µm and more preferably between 5 and 50 µm.

The fibre length of the food compatible material ranges between 1 and 800 µm, preferably between 5 and 100 µm and thickness of the fibres between 1 and 400 µm, preferably between 5 and 50 µm.

The coating may be performed manually or automatically and it may be carried out by spraying, blowing, fluidising, dusting, sputtering or by suction, preferably by spraying.

The coating may be carried out at a temperature of 0 - 100°C, preferably at ambient temperature of 15 - 30°C and typically under atmospheric pressure, however pressures below and above atmospheric pressure may also be used.

The coating device may be any suitable coating device known in the art and preferably it is selected from spray guns, air wipes and air knives.

The method according to the invention comprises the steps wherein a tubular fibrous paper substrate is impregnated with viscose, which is optionally coloured, and then the impregnated tubular fibrous paper substrate is coated with particles and/or fibres of food compatible material or materials after the impregnation. Preferably the coating is carried out under the die, before coagulating and regeneration baths. Alternatively the coating may be carried out after the coagulation or regeneration baths.

The coating is carried out using at least one coating device and the coating device is preferably selected from spray guns, air wipes and air knives. Preferably the coating is carried out in a coating chamber comprising one or more coating devices, however in some cases the coating chamber is not necessary and the process is continued like a conventional viscose process.

The impregnated tubular fibrous paper substrate is coated with a food compatible material selected from particles and/or fibres of food compatible inorganic salts, salts of organic acids, saccharides, plants, glass, colour pigments, silica, alumina, titania and combinations of said materials. Preferably the food compatible material is an inorganic salt.

The obtained coated tubular food casing is then passed to stages, which ever remain to be performed in a conventional viscose process, such as coagulating and regeneration baths, washing, plastisizing and drying, depending on at which stage the coating is performed.

The saccharides are selected from monosaccharides, oligosaccharides, polysaccharides and their derivatives. Preferably the monosaccharide is glucose or fructose, the oligosaccharide is preferably saccharose, maltose or lactose and the polysaccharide is preferably cellulose, cellulose derivative, starch or starch derivative.

The plant is vegetable, fruit, cereal and preferably wheat, oat, apple, tomato, pea or orange.

The inorganic salt contains preferably a cation selected from sodium, potassium, magnesium, ammonium, calcium, iron, manganese, barium, titanium, silicon, silver, copper, chromium and aluminium and an anion selected from sulphate, carbonate, chloride, fluoride, iodide, nitrate, nitrite, bicarbonate, phosphate, hydroxide, oxide and silicate, particularly preferably the inorganic salt is sodium sulphate.

The salt of an organic acid is a sodium, potassium, magnesium, ammonium, calcium, iron, manganese, barium, titanium, silicon, silver, copper, chromium or aluminium salt of an organic acid with an alkyl chain having a chain length between C₁-C₂₀.

Preferably natural cellulose fibres or microcrystalline cellulose is used.

The fibres or particles may be electrically charged, using methods well known in the art, before applying them on the surface of the casing.

A stream comprising a carrier gas or a carrier liquid, preferably carrier gas, and particles and/or fibres of the food compatible material or materials is passed or transferred using the coating device on the surface of the viscose impregnated tubing. The carrier gas is selected from inert gases such as noble gases, N₂ and air, and preferably air is used. The desired air/gas flow may be achieved using a fan or pressurised air.

Instead of the gas the stream may optionally comprise water or an aqueous acid or base solution, which is used in the coagulating and regeneration baths in the process for the manufacture of cellulose or fibre-reinforced cellulose casings. Preferably the coating method is performed on continuous basis.

From the coating chamber the tubing which is coated with the fibres and/or particles, is then passed to stages, which ever remain to be performed in a conventional viscose process or other cellulose or fibre-reinforced cellulose based process depending which type of casing is manufactured, such as coagulating and regeneration baths, washing, plastisizing and drying. Typically the coagulation baths and regeneration baths comprise acid and the washing stage is carried out using water. In the conventional fibre-reinforced cellulose process, after regeneration, follows washing, plastisizing and drying stages. After the drying stage the fibre-reinforced cellulose casing is collected in reels.

The apparatus for the coating of a cellulose or fibre-reinforced cellulose food casing comprises a coating chamber (3) comprising a coating device connected to a container for fibres and/or particles (5) having a gas or liquid inlet, and having inlet and outlet for the tubing to be coated.

According to the invention a slip resistant seamless tubular food casing, such as cellulose or fibre-reinforced cellulose casing is obtained, with an external surface modified with fibres and/or particles of food compatible material. The external surface contains fibres and/or particles attached on the surface without adhesives or resins or alternatively the external surface comprises craters and/or cavities, which make the surface rough. The tubular food casing according to the invention has improved grip properties and slip resistance, in addition to a rough matt surface or comprising stripes, dots or figures. It is very easily horn mountable with excellent grip because of improved surface friction. An average horn mounting time for the fibre and/or particles modified fibre-reinforced cellulose casing processed according to the invention is between 2 and 3 seconds and for unprocessed casing between 5 and 10 seconds. The modified casings slide nicely to the horn, when uncoated/unprocessed casing get stuck on the horn. Also clips can be fastened more tightly.

Any kind of sausages, cheese, ham, poultry and fish products can be stuffed in the casing according to the invention and particularly suitable are dry sausages and semi-dry sausages.

As no adhesives or resins are needed there are no problems relating to potential residues in the resins, no resin baths or additional drying steps are needed and there is no need to dispose used adhesives or resins. The method according to the invention is simple and economic.

Further, as coating materials such as cellulose and other natural materials like vegetable fibres are not harmful to the environment, there are no problems relating to the waste disposal and also the amount of waste can be minimized.

The coating operation can easily be performed, particularly in the beginning of the process for the manufacture of a food casing before coagulation and regeneration baths and washing stages. It is surprising that the coating can be performed before the coagulating and regeneration baths and washing stages and the desired surface properties of the casing are achieved.

The obtained slip resistant seamless tubular food casings suit particularly well for use in high-speed food stuffing equipment on an industrial scale, but they are also equally suitable for manually operated systems where the casings, in the form of tubular pieces of varying lengths, are pushed onto the stuffing horn of the filling machine. The casings can be easily pushed onto a stuffing horn in the wet stage. Thus the problems relating to gripping and retaining the casings have been solved or at least significantly decreased.

The invention is illustrated with the following examples, however the scope of the invention is not meant to limited to these examples only.

### Examples

### Example 1.

A fibrous paper substrate in tubular form was impregnated with viscose, and under the die the impregnated paper tubing was coated in a coating chamber with cellulose fibres using an air knife. The coated tubing was passed to coagulating and regeneration baths, washed, plasticized and dried. A tubular casing having the outer surface coated with cellulose fibres was obtained

### Example 2.

A fibrous paper substrate in tubular form was impregnated with viscose and under the die the impregnated paper tubing was coated in a coating chamber with sodium sulphate particles using an air knife. The coated tubing was passed to coagulating and regeneration baths, washed, plasticized and dried. A tubular casing having the outer surface modified with particles was obtained and the surface comprised small craters giving the casing the desired rough surface.

The slip resistant seamless tubular food casings obtained in examples 1 and 2 showed good gripping properties.

## Claims

1. A seamless tubular food casing, **characterized in that** the food casing comprises a fibre-reinforced cellulose casing having an external surface modified with particles and/or fibres of food compatible material, and the external surface being modified without adhesives and resins.

2. The tubular food casing according to claim 1, **characterized in that** the food compatible material forms an even surface or stripes, dots or figures.

3. The tubular food casing according to claim 1 or 2, **characterized in that** the food compatible material is selected from particles and/or fibres of food compatible inorganic salts, salts of organic acids, saccharides, plants, glass, colour pigments, silica, alumina, titania and combinations of said materials.

4. The tubular food casing according to claim 3, **characterized in that** the saccharides are selected from monosaccharides, oligosaccharides, polysaccharides and their derivatives, preferably glucose, fructose, saccharose, maltose, lactose, cellulose, cellulose derivatives, starch or starch derivative and particularly preferably natural cellulose fibres or microcrystalline cellulose.

5. The tubular food casing according to claim 3, **characterized in that** the plant is vegetable, fruit, cereal and preferably wheat, oat, apple, tomato, pea or orange.

6. The tubular food casing according to claim 3, **characterized in that** the inorganic salt contains a cation selected from sodium, potassium, magnesium, ammonium, calcium, iron, manganese, barium, titanium, silicon, silver, copper, chromium and aluminium and an anion selected from sulphate, carbonate, chloride, fluoride, iodide, nitrate, nitrite, bicarbonate, phosphate, hydroxide, oxide and silicate, preferably the inorganic salt is sodium sulphate.

7. The tubular food casing according to claim 3, **characterized in that** the salt of an organic acid is a sodium, potassium, magnesium, ammonium, calcium, iron, manganese, barium, titanium, silicon, silver, copper, chromium or aluminium salt of an organic acid with an alkyl chain having a chain length of C₁-C₂₀.

8. The tubular food casing according to any one of claims 1-7, **characterized in that** the average particle size of the food compatible material ranges between 0.1 µm and 2 mm, preferably between 1 and 400 µm, and particularly preferably between 5 and 50 µm.

9. The tubular food casing according to any one of claims 1-7, **characterized in that** the fibre length of the food compatible material ranges between 1 and 800 µm, preferably between 5 and 100 µm and thickness of the fibres ranges between 1 and 400 µm, preferably between 5 and 50 µm.

10. A method for the manufacture of a tubular food casing, **characterized in that** the method comprises the steps wherein a tubular fibrous paper substrate is impregnated with viscose, which is optionally coloured, and then the impregnated tubular fibrous paper substrate is coated with particles and/or fibres of food compatible material, without adhesives and resins, and the process is continued like a viscose process.

11. The method according to claim 10, **characterized in that** the impregnated tubular fibrous paper substrate is coated under the die and the coated tubular food casing is then passed to coagulating and regeneration baths and the process is continued like a viscose process including washing, plastisizing and drying stages.

12. The method according to claim 10 or 11, **characterized in that** the coating is performed manually or automatically and it is carried out by spraying, blowing, fluidising, dusting, sputtering or by suction.

13. The method according to any one of claims 10 - 12, **characterized in that** coating is carried out using at least one coating device and the coating device is preferably selected from spray guns, air wipes and air knives.

14. The method according to any one of claims 10 - 13, **characterized in that** the coating is carried out in a coating chamber comprising one or more coating devices and the fibres or particles are electronically charged.

15. The method according to any one of claims 10 - 14, **characterized in that** the food compatible material is selected from particles and/or fibres of food compatible inorganic salts, salts of organic acids, saccharides, plants, glass, colour pigments, silica, alumina, titania and combinations of said materials.

16. The method according to claim 15, **characterized in that** the saccharides are selected from monosaccharides, oligosaccharides, polysaccharides and their derivatives, preferably glucose, fructose, saccharose, maltose, lactose, cellulose, cellulose derivatives, starch or starch derivative and particularly preferably natural cellulose fibres or microcrystalline cellulose.

17. The method according to claim 15, **characterized in that** the plant is vegetable, fruit, cereal and preferably wheat, oat, apple, tomato, pea or orange.

18. The method according to claim 15, **characterized in that** the inorganic salt contains a cation selected from sodium, potassium, magnesium, ammonium, calcium, iron, manganese, barium, titanium, silicon, silver, copper, chromium and aluminium and an anion selected from sulphate, carbonate, chloride, fluoride, iodide, nitrate, nitrite, bicarbonate, phosphate, hydroxide, oxide and silicate, preferably the inorganic salt is sodium sulphate.

19. The method according to claim 15, **characterized in that** the salt of an organic acid is a sodium, potassium, magnesium, ammonium, calcium, iron, manganese, barium, titanium, silicon, silver, copper, chromium or aluminium salt of an organic acid with an alkyl chain having a chain length of C₁-C₂₀.

20. The method according to any one of claims 10 - 19, **characterized in that** the average particle size of the food compatible material ranges between 0.1 µm and 2 mm, preferably between 1 and 400 µm, and particularly preferably between 5 and 50 µm.

21. The method according to any one of claims 10 - 19, **characterized in that** the fibre length of the food compatible material ranges between 1 and 800 µm, preferably between 5 and 100 µm and thickness of the fibres ranges between 1 and 400 µm, preferably between 5 and 50 µm.

22. The method according to any one of claims 10 - 21, **characterised in that** a stream comprising a carrier gas and the particles and/or fibres of the food compatible material is passed or transferred using the coating device on the surface of the viscose impregnated tubular fibrous paper substrate.

23. The method according to claim 22, **characterised in that** the carrier gas is selected from noble gases, N₂ and air, and preferably air is used.

24. A method according to any one of claims 10 - 23, **characterised in that** an even surface or stripes, dots or figures are formed on the surface of the tubular casing.

25. The use of the tubular food casing according to any one of claims 1-9 or obtained using the method according to any one of claims 10-24 in the manufacture of food products selected from sausages, cheese, ham, poultry, vegetable, fish and pet food products, preferably dry sausages and semi-dry sausages.

## Patentansprüche

1. Übergangsloses, röhrenförmiges Lebensmittelgehäuse, **dadurch gekennzeichnet, dass** das Lebensmittelgehäuse ein faserverstärktes Cellulosegehäuse enthält, welches eine externe Oberfläche hat, welche mit Partikeln und/oder Fasern von einem lebensmittelkompatiblen Material modifiziert ist, und die externe Oberfläche ohne Klebemittel und Kunstharze modifiziert ist.

2. Röhrenförmiges Lebensmittelgehäuse nach Anspruch 1, **dadurch gekennzeichnet, dass** das lebensmittelkompatible Material eine gleichförmige Oberfläche oder Streifen, Punkte oder Gestaltungen ausbildet.

3. Röhrenförmiges Lebensmittelgehäuse nach Anspruch 1 oder 2, **dadurch gekennzeichnet, dass** das lebensmittelkompatible Material aus Partikeln und/oder Fasern von lebensmittelkompatiblen, anorganischen Salzen, Salzen von organischen Säuren, Sacchariden, Pflanzenstoffen, Glas, Farbpigmenten, Quarz, Aluminium, Titan und Kombinationen aus diesen Materialien ausgewählt ist.

4. Röhrenförmiges Lebensmittelgehäuse nach Anspruch 3, **dadurch gekennzeichnet, dass** die Sacchariden aus Monosacchariden, Oligosacchariden, Polysacchariden und ihren Derivaten ausgewählt sind, vorzugsweise Glucose, Fructose, Saccharose, Maltose, Lactose, Cellulose, Cellulose-Derivate, Stärke oder Stärke-Derivat, und insbesondere bevorzugt natürliche Cellulosefasern oder mikrokristalline Cellulose.

5. Röhrenförmiges Lebensmittelgehäuse nach Anspruch 3, **dadurch gekennzeichnet, dass** der Pflanzenstoff pflanzlich, fruchtartig, getreideartig und vorzugsweise Weizen, Hafer, Apfel, Tomate, Erbse oder Orange ist.

6. Röhrenförmiges Lebensmittelgehäuse nach Anspruch 3, **dadurch gekennzeichnet, dass** das anorganische Salz ein Kation, welches aus Natrium, Kalium, Magnesium, Ammonium, Calcium, Eisen, Mangan, Barium, Titan, Silizium, Silber, Kupfer, Chrom und Aluminium ausgewählt ist, und ein Anion enthält, welches aus Sulfat, Carbonat, Chlorid, Fluorid, Iodsalz, Nitrat, Nitrit, Bicarbonat, Phosphat, Hydroxid, Oxid und Silicat ausgewählt ist, wobei das anorganische Salz vorzugsweise Natriumsulfat ist.

7. Röhrenförmiges Lebensmittelgehäuse nach Anspruch 3, **dadurch gekennzeichnet, dass** das Salz von einer organischen Säure gleich Natrium, Kalium, Magnesium, Ammonium, Calcium, Eisen, Mangan, Barium, Titan, Silizium, Silber, Kupfer, Chrom oder Aluminiumsalz von einer organischen Säure mit einer Alkylkette, welche eine Kettenlänge von C₁-C₂₀ hat, ist.

8. Röhrenförmiges Lebensmittelgehäuse nach einem der Ansprüche 1-7, **dadurch gekennzeichnet, dass** die mittlere Partikelgröße von dem lebensmittelkompatiblen Material in einem Bereich zwischen 0,1 µm und 2 mm, vorzugsweise zwischen 1 und 400 µm und insbesondere bevorzugt zwischen 5 und 50 µm ist.

9. Röhrenförmiges Lebensmittelgehäuse nach einem der Ansprüche 1-7, **dadurch gekennzeichnet, dass** die Faserlänge von dem lebensmittelkompatiblen Material in einem Bereich zwischen 1 und 800 µm, vorzugsweise zwischen 5 und 100 µm ist, und die Dicke von den Fasern in einem Bereich zwischen 1 und 400 µm, vorzugsweise zwischen 5 und 50 µm ist.

10. Verfahren zum Herstellen eines röhrenförmigen Lebensmittelgehäuses, **dadurch gekennzeichnet, dass** das Verfahren die Schritte enthält, bei welchen ein röhrenförmiges faserförmiges Papiersubstrat mit Viskose imprägniert wird, welche optional farbig ist, und dann das imprägnierte röhrenförmige faserförmige Papiersubstrat mit Partikeln und/oder Fasern von einem lebensmittelkompatiblen Material ohne Klebemittel und Kunstharze beschichtet wird, und der Prozess ähnlich einem Viskose-Prozess fortgeführt wird.

11. Verfahren nach Anspruch 10, **dadurch gekennzeichnet, dass** das imprägnierte röhrenförmige faserförmige Papiersubstrat unter einer Stanze beschichtet wird, und das beschichtete röhrenförmige Lebensmittelgehäuse dann zu einem Erstarrungs- und Regenerationsbad passiert wird, und der Prozess ähnlich einem Viskose-Prozess fortgeführt wird, welcher Wasch-, Plastifizierungs- und Trocknungsstufen enthält.

12. Verfahren nach Anspruch 10 oder 11, **dadurch gekennzeichnet, dass** die Beschichtung manuell oder automatisch durchgeführt wird, und durch Besprühen, Blasen, Wirbeln, Bestäuben, Sputtern oder durch Saugen durchgeführt wird.

13. Verfahren nach einem der Ansprüche 10 - 12, **dadurch gekennzeichnet, dass** die Beschichtung unter Verwendung von zumindest einer Beschichtungsvorrichtung durchgeführt wird, und die Beschichtungsvorrichtung vorzugsweise aus Sprühkanonen, Luftwischern und Luftmessern ausgewählt wird.

14. Verfahren nach einem der Ansprüche 10 - 13, **dadurch gekennzeichnet, dass** die Beschichtung in einer Beschichtungskammer durchgeführt wird, welche eine oder mehrere Beschichtungsvorrichtungen enthält, und die Fasern oder Partikel elektrisch aufgeladen werden.

15. Verfahren nach einem der Ansprüche 10 - 14, **dadurch gekennzeichnet, dass** das lebensmittelkompatible Material aus Partikeln und/oder Fasern von lebensmittelkompatiblen anorganischen Salzen, Salzen von organischen Säuren, Sacchariden, Pflanzenstoffen, Glas, Farbpigmenten, Quarz, Aluminium, Titan und Kombinationen von diesen Materialien ausgewählt wird.

16. Verfahren nach Anspruch 15, **dadurch gekennzeichnet, dass** die Sacchariden aus Monosacchariden, Oligosacchariden, Polysacchariden und ihren Derivaten ausgewählt werden, vorzugsweise Glucose, Fructose, Saccharose, Maltose, Lactose, Cellulose, Cellulose-Derivate, Stärke oder Stärke-Derivat, und insbesondere bevorzugt natürliche Cellulosefasern oder mikrokristalline Cellulose.

17. Verfahren nach Anspruch 15, **dadurch gekennzeichnet, dass** der Pflanzenstoff pflanzlich, fruchtartig, getreideartig und vorzugsweise Weizen, Hafer, Apfel, Tomate, Erbse oder Orange ist.

18. Verfahren nach Anspruch 15, **dadurch gekennzeichnet, dass** das anorganische Salz ein Kation, welches aus Natrium, Kalium, Magnesium, Ammonium, Calcium, Eisen, Mangan, Barium, Titan, Silizium, Silber, Kupfer, Chrom und Aluminium ausgewählt wird, und ein Anion enthält, welches aus Sulfat, Carbonat, Chlorid, Fluorid, Iodsalz, Nitrat, Nitrit, Bicarbonat, Phosphat, Hydroxid, Oxid und Silicat ausgewählt wird, wobei das anorganische Salz vorzugsweise Natriumsulfat ist.

19. Verfahren nach Anspruch 15, **dadurch gekennzeichnet, dass** Salz von einer organischen Säure gleich Natrium, Kalium, Magnesium, Ammonium, Calcium, Eisen, Mangan, Barium, Titan, Silizium, Silber, Kupfer, Chrom oder Aluminiumsalz von einer organischen Säure mit einer Alkylkette, welche eine Kettenlänge von C₁-C₂₀ hat, ist.

20. Verfahren nach einem der Ansprüche 10 - 19, **dadurch gekennzeichnet, dass** die mittlere Partikelgröße von dem lebensmittelkompatiblen Material in einem Bereich zwischen 0,1 µm und 2 mm, vorzugsweise zwischen 1 und 400 µm und insbesondere bevorzugt zwischen 5 und 50 µm ist.

21. Verfahren nach einem der Ansprüche 10-19, **dadurch gekennzeichnet, dass** die Faserlänge von dem lebensmittelkompatiblen Material in einem Bereich zwischen 1 und 800 µm, vorzugsweise zwischen 5 und 100 µm ist, und die Dicke von den Fasern in einem Bereich zwischen 1 und 400 µm, vorzugsweise zwischen 5 und 50 µm ist.

22. Verfahren nach einem der Ansprüche 10-21, **dadurch gekennzeichnet, dass** ein Strom, welcher ein Trägergas und die Partikel und/oder Fasern von dem lebensmittelkompatiblen Material enthält, unter Verwendung von der Beschichtungsvorrichtung auf der Oberfläche von dem mit Viskose imprägnierten röhrenförmigen faserförmigen Papiersubstrat passiert oder überführt wird.

23. Verfahren nach Anspruch 22, **dadurch gekennzeichnet, dass** das Trägergas aus Edelgasen, N₂ und Luft ausgewählt wird, und vorzugsweise Luft verwendet wird.

24. Verfahren nach einem der Ansprüche 10 - 23, **dadurch gekennzeichnet, dass** eine gleichförmige Oberfläche oder Streifen, Punkte oder Gestaltungen auf der Oberfläche von dem röhrenförmigen Gehäuse ausgebildet werden.

25. Verwendung eines röhrenförmigen Lebensmittelgehäuses nach einem der Ansprüche 1 - 9 oder erlangt unter Verwendung des Verfahrens nach einem der Ansprüche 10 - 24 bei der Herstellung von Lebensmittelprodukten, welche aus Würsten, Käse, Schinken, Geflügel, Gemüsesorten, Fisch und Tiernahrungsprodukten ausgewählt sind, vorzugsweise Trockenwürste und Halbtrockenwürste.

## Revendications

1. Boîte tubulaire sans soudure pour aliments, **caractérisée en ce que** la boîte pour aliments comprend une boîte de cellulose renforcée de fibres ayant une surface externe modifiée avec des particules et/ou fibres de matière compatible avec les aliments, la surface externe étant modifiée sans adhésif ni résine.

2. Boîte tubulaire pour aliments selon la revendication 1, **caractérisée en ce que** la matière compatible avec les aliments forme une surface lisse ou une surface avec des bandes, des points ou des figures.

3. Boîte tubulaire pour aliments selon la revendication 1 ou 2, **caractérisée en ce que** la matière compatible avec les aliments est choisie parmi des particules et/ou fibres compatibles avec les aliments de sels inorganiques, sels d'acides organiques, saccharides, plantes, verre, pigments de couleur, silice, alumine, titane et combinaisons desdites matières.

4. Boîte tubulaire pour aliments selon la revendication 3, **caractérisée en ce que** les saccharides sont choisis parmi les monosaccharides, oligosaccharides, polysaccharides et leurs dérivés, de préférence, le glucose, le fructose, le saccharose, le maltose, le lactose, la cellulose, les dérivés de cellulose, l'amidon ou un dérivé d'amidon et en particulier, de préférence, les fibres de cellulose naturelle ou la cellulose microcristalline.

5. Boîte tubulaire pour aliments selon la revendication 3, **caractérisée en ce que** la plante est un légume, un fruit, une céréale et de préférence, blé, avoine, pomme, tomate, pois ou orange.

6. Boîte tubulaire pour aliments selon la revendication 3, **caractérisée en ce que** le sel inorganique contient un cation choisi parmi sodium, potassium, magnésium, ammonium, calcium, fer, manganèse, baryum, titane, silicium, argent, cuivre, chrome et aluminium et un anion choisi parmi sulfate, carbonate, chlore, fluor, iode, nitrate, nitrite, bicarbonate, phosphate, hydroxyde, oxyde et silicate, le sel inorganique étant de préférence du sulfate de sodium.

7. Boîte tubulaire pour aliments selon la revendication 3, **caractérisée en ce que** le sel d'un acide organique est un sel de sodium, potassium, magnésium, ammonium, calcium, fer, manganèse, baryum, titane, silicium, argent, cuivre, chrome ou aluminium d'un acide organique avec une chaîne alkyle ayant une longueur de chaîne de C₁-C₂₀.

8. Boîte tubulaire pour aliments selon l'une quelconque des revendications 1 à 7, **caractérisée en ce que** la taille de particule moyenne de la matière compatible avec les aliments est comprise entre 0,1 µm et 2 mm, de préférence entre 1 et 400 µm, et plus particulièrement, entre 5 et 50 µm.

9. Boîte tubulaire pour aliments selon l'une quelconque des revendications 1 à 7, **caractérisée en ce que** la longueur de fibre de la matière compatible avec les aliments est comprise entre 1 et 800 µm, de préférence, entre 5 et 100 µm et l'épaisseur des fibres est comprise entre 1 et 400 µm, de préférence, entre 5 et 50 µm.

10. Procédé pour la fabrication d'une boîte tubulaire pour aliments, **caractérisé en ce que** le procédé comprend les étapes dans lesquelles un substrat de papier fibreux tubulaire est imprégné avec de la viscose, qui est éventuellement colorée, et ensuite, le substrat de papier fibreux tubulaire imprégné est enduit de particules et/ou de fibres de matière compatible avec les aliments, sans adhésif ni résine, et le traitement est effectué comme un traitement de viscose.

11. Procédé selon la revendication 10, **caractérisé en ce que** le substrat de papier fibreux tubulaire imprégné est enduit sous la matrice et la boîte tubulaire pour aliments enduite est ensuite transmise à des bains de coagulation et de régénération et le traitement se poursuit comme un traitement de viscose, y compris les étapes de lavage, plastification et séchage.

12. Procédé selon la revendication 10 ou 11, **caractérisé en ce que** le revêtement est effectué manuellement ou automatiquement et il est effectué par pulvérisation, soufflage, fluidisation, poudrage, pulvérisation cathodique ou aspiration.

13. Procédé selon l'une quelconque des revendications 10 à 12, **caractérisé en ce que** le revêtement est effectué en utilisant au moins un dispositif de revêtement et le dispositif de revêtement est de préférence choisi parmi les pistolets de pulvérisation, racleurs à air et lames d'air.

14. Procédé selon l'une quelconque des revendications 10 à 13, **caractérisé en ce que** le revêtement est effectué dans une chambre de revêtement comprenant un ou plusieurs dispositifs de revêtement et les fibres ou particules sont chargées électroniquement.

15. Procédé selon l'une quelconque des revendications 10 à 14, **caractérisé en ce que** la matière compatible avec les aliments est choisie parmi les particules et/ou fibres compatibles avec les aliments de sels inorganiques, sels d'acides organiques, saccharides, plantes, verre, pigments de couleur, silice, alumine, titane et combinaisons desdites matières.

16. Procédé selon la revendication 15, **caractérisé en ce que** les saccharides sont choisis parmi les monosaccharides, oligosaccharides, polysaccharides et leurs dérivés, de préférence, le glucose, le fructose, le saccharose, le maltose, le lactose, la cellulose, les dérivés de cellulose, l'amidon ou un dérivé d'amidon et en particulier, de préférence, les fibres de cellulose naturelle ou la cellulose microcristalline.

17. Procédé selon la revendication 15, **caractérisé en ce que** la plante est un légume, un fruit, une céréale et de préférence, blé, avoine, pomme, tomate, pois ou orange.

18. Procédé selon la revendication 15, **caractérisé en ce que** le sel inorganique contient un cation choisi parmi sodium, potassium, magnésium, ammonium, calcium, fer, manganèse, baryum, titane, silicium, argent, cuivre, chrome et aluminium et un anion choisi parmi sulfate, carbonate, chlore, fluor, iode, nitrate, nitrite, bicarbonate, phosphate, hydroxyde, oxyde et silicate, le sel inorganique étant de préférence du sulfate de sodium.

19. Procédé selon la revendication 15, **caractérisé en ce que** le sel d'un acide organique est un sel de sodium, potassium, magnésium, ammonium, calcium, fer, manganèse, baryum, titane, silicium, argent, cuivre, chrome ou aluminium d'un acide organique avec une chaîne alkyle ayant une longueur de chaîne de C₁-C₂₀.

20. Procédé selon l'une quelconque des revendications 10 à 19, **caractérisé en ce que** la taille de particule moyenne de la matière compatible avec les aliments est comprise entre 0,1 µm et 2 mm, de préférence, entre 1 et 400 µm, et en particulier de préférence, entre 5 et 50 µm.

21. Procédé selon l'une quelconque des revendications 10 à 19, **caractérisé en ce que** la longueur de fibre de la matière compatible avec les aliments est comprise entre 1 et 800 µm, de préférence, entre 5 et 100 µm et l'épaisseur des fibres est comprise entre 1 et 400 µm, de préférence, entre 5 et 50 µm.

22. Procédé selon l'une quelconque des revendications 10 à 21, **caractérisé en ce qu'**une vapeur comprenant un gaz porteur et les particules et/ou fibres de la matière compatible avec les aliments est transmise ou transférée en utilisant le dispositif de revêtement sur la surface du substrat de papier fibreux tubulaire imprégné de viscose.

23. Procédé selon la revendication 22, **caractérisé en ce que** le gaz porteur est choisi parmi les gaz nobles, le N₂ et l'air, et de l'air est de préférence utilisé.

24. Procédé selon l'une quelconque des revendications 10 à 23, **caractérisé en ce qu'**une surface lisse ou une surface avec des bandes, des points ou des figures sont formés sur la surface de la boîte tubulaire.

25. Utilisation de la boîte tubulaire pour aliments selon l'une quelconque des revendications 1 à 9 ou obtenue en utilisant le procédé selon l'une quelconque des revendications 10 à 24 dans la fabrication de produits alimentaires sélectionnés parmi saucisses, fromage, jambon, volaille, légumes, poisson et aliments pour animaux, de préférence, saucisses sèches et saucisses semi-sèches.
